(19) Europäisches Patentamt / European Patent Office / Office européen des brevets

(11) **EP 2 170 678 B1**

(12) **FASCICULE DE BREVET EUROPEEN**

(45) Date de publication et mention de la délivrance du brevet:
**12.11.2014 Bulletin 2014/46**

(21) Numéro de dépôt: **08805922.5**

(22) Date de dépôt: **03.06.2008**

(51) Int Cl.:
*B62D 7/15* (2006.01)      *B62D 6/00* (2006.01)
*B62D 6/04* (2006.01)      *B62D 9/00* (2006.01)
*B60T 8/1764* (2006.01)    *B60T 8/62* (2006.01)
*B60W 10/18* (2012.01)     *B60W 10/20* (2006.01)
*B62D 101/00* (2006.01)    *B62D 111/00* (2006.01)
*B62D 113/00* (2006.01)

(86) Numéro de dépôt international:
**PCT/FR2008/050979**

(87) Numéro de publication internationale:
**WO 2008/155501 (24.12.2008 Gazette 2008/52)**

(54) **SYSTEME ET PROCEDE DE COMMANDE DU BRAQUAGE DE ROUES DIRECTRICES D'UN VEHICULE AUTOMOBILE EN SITUATION DE FREINAGE AVEC ADHERENCE ASYMETRIQUE**

SYSTEM UND VERFAHREN ZUR STEUERUNG DER DREHUNG DES LENKRADES EINES AUTOMOBILS IN EINER BREMSSITUATION MIT ASYMMETRISCHER HAFTUNG

SYSTEM AND METHOD FOR CONTROLLING THE TURN OF THE STEERING WHEELS OF AN AUTOMOBILE IN A BRAKING SITUATION WITH ASYMMETRICAL ADHESION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.06.2007 FR 0755717**

(43) Date de publication de la demande:
**07.04.2010 Bulletin 2010/14**

(73) Titulaire: **Renault SAS**
**92100 Boulogne Billancourt (FR)**

(72) Inventeurs:
- **BARBOTIN, Pascal**
  **F-76130 Mont Saint Aignan (FR)**
- **BRARD, Olivier**
  **F-27000 Evreux (FR)**
- **GUEGAN, Stéphane**
  **F-78000 Versailles (FR)**

(56) Documents cités:
EP-A- 1 215 103      DE-A1- 4 225 983
DE-A1- 10 053 604    FR-A- 2 876 339
US-B2- 6 863 356

EP 2 170 678 B1

**Description**

La présente invention concerne un système et un procédé de commande du braquage d'une paire de roues directrices d'un véhicule automobile en situation de freinage avec adhérence asymétrique.

Un véhicule automobile à quatre roues est aujourd'hui équipé d'un système d'anti-blocage de roues, ou système ABS, qui applique un freinage différent à chaque roue du véhicule en fonction de conditions d'adhérence rencontrées par celle-ci.

De fait, lorsqu'une situation d'adhérence asymétrique survient, c'est-à-dire qu'une roue droite du véhicule a une adhérence différente de celle d'une roue gauche du véhicule, une différence entre les couples de freinage appliqués par le système ABS aux roues droite et gauche apparaît. Cette différence de couples de freinage a alors pour effet de produire un couple de lacet et/ou une déviation du véhicule par rapport à une trajectoire souhaitée par le conducteur.

Pour pallier cet inconvénient, il est prévu dans l'état de la technique d'équiper le véhicule automobile avec des roues arrières directrices dont l'angle de braquage est commandé pour rejeter un couple de lacet généré par une différence entre les couples de freinage appliqués aux roues avant.
Un tel type de système est connu du document FR 2 876 339 A1

Toutefois, on observe dans ce type de système que la commande de l'angle de braquage présente une dynamique très élevée, c'est-à-dire répond à des oscillations rapides de la différence entre les couples de freinage appliqués aux roues avant. De fait, l'angle de braquage des roues arrière présente également des oscillations rapides, ce qui est particulièrement désagréable pour le conducteur du véhicule.

Le but de la présente invention est donc de fournir un système du type précité qui améliore l'agrément de conduite lors d'une situation de freinage avec adhérence asymétrique tout en rejetant de manière efficace le couple de lacet apparaissant dans une telle situation.

A cet effet, l'invention a pour objet un système de commande du braquage d'une paire de roues directrices d'un véhicule automobile en situation de freinage avec adhérence asymétrique, ledit système comportant des moyens de commande d'un angle de braquage de la paire de roues directrices afin de minimiser une différence entre des couples de freinage appliqués à une roue droite et une roue gauche du véhicule, caractérisé en ce que les moyens de commande comprennent des moyens de détermination d'un signal de commande intermédiaire de l'angle de braquage et des moyens de filtrage passe-bas du signal de commande intermédiaire, les moyens de filtrage présentant au moins une constante de temps variable pour être aptes à mettre en oeuvre une loi de commande à dynamique variable, rapide au début du freinage puis lente.

Ainsi, il est possible d'adapter la commande du braquage des roues directrices à différentes phases du freinage. Notamment, lorsque le couple de lacet est sensiblement rejeté, il est particulièrement avantageux de diminuer la dynamique de la loi de commande de manière à insensibiliser le braquage des roues directrices vis-à-vis d'oscillations rapides de la différence entre les couples de freinage. Le couple de lacet est ainsi sensiblement rejeté et l'agrément de conduite amélioré.

Selon des modes de réalisation particulier de l'invention, le système comporte une ou plusieurs des caractéristiques suivantes :

- la loi de commande présente une dynamique rapide pendant une durée prédéterminée après l'instant de déclenchement du freinage ;
- la durée prédéterminée est sensiblement égale à 1 seconde ;
- en début de freinage, la au moins une constante de temps est sensiblement inférieure à un temps de réponse d'une pression de freinage d'un dispositif de freinage ;
- le véhicule est muni d'une paire de roue directrice avant et d'une paire de roues directrice arrière, et en ce que les moyens de commande sont aptes à commander l'angle de braquage des roues arrières pour minimiser une différence entre des couples de freinage appliqués aux roues avant ;
- il comporte des moyens de mesure de pression de freinage appliquées aux roues gauche et droite, et en ce que les moyens de commande sont aptes à commander l'angle de braquage des roues directrices en fonction d'une différence entre les pressions de freinage mesurées ;
- les moyens de commande sont aptes à commander l'angle de braquage des roues directrices selon la relation :

$$ U_{\alpha_{AR},1} = \left( g\, \frac{D_1 + D_2}{D_1 D_2 L}\, Ke \right) F \otimes (P_{AVD} - P_{AVG}), $$

où F est un filtre du type passe-bas à dynamique variable, $P_{AVC}$, $P_{AVD}$ sont les pressions de freinage des roues

avant, $D_1$ est la rigidité de dérive des pneumatiques des roues avant du véhicule, $D_2$ est la rigidité de dérive des roues arrière du véhicule, L est l'empattement du véhicule, e est la voie du véhicule, K est une constante prédéterminée, et g est un gain dépendant du type d'adhérence asymétrique observée ;

- il comporte en outre des moyens d'estimation d'une perturbation extérieure relative à un couple de lacet du véhicule, et des moyens de rejet de ladite perturbation par une commande de l'angle de braquage des roues directrices en fonction de la perturbation estimée ; et

- les moyens d'estimation sont aptes à mettre en oeuvre un observateur d'état d'une perturbation additive sur une vitesse de lacet du véhicule.

Le problème susmentionné est également résolu selon l'invention par un procédé de commande du braquage d'une paire de roues directrices d'un véhicule automobile en situation de freinage avec adhérence asymétrique, ledit procédé comportant une étape de commande d'un angle de braquage de la paire de roues directrices afin de minimiser une différence entre des couples de freinage appliqués à une roue droite et une roue gauche du véhicule, caractérisé en ce que l'étape de commande comprend la détermination d'un signal de commande intermédiaire de l'angle de braquage et un filtrage passe-bas du signal de commande intermédiaire à l'aide d'au mins une constante de temps variable pour la mise en oeuvre d'une loi de commande à dynamique variable, rapide au début du freinage puis lente.

La présente invention sera mieux comprise à la lecture de la description qui va suivre, donnée uniquement à titre d'exemple, et faite en relation avec les dessins annexés dans lesquels des références identiques se rapportent à des éléments identiques ou analogues, et dans lesquels :

- la figure 1 est une vue schématique d'un système de commande selon l'invention appliqué à un véhicule automobile pourvu de quatre roues directrices et dont seules les roues avant sont équipées de capteurs de pression de freinage ;
- la figure 2 est une vue schématique d'une unité de commande entrant dans la constitution du système de la figure 1 ; et
- la figure 3 est une vue schématique d'un premier module de calcul d'un angle de braquage entrant dans la constitution de l'unité de commande de la figure 2.

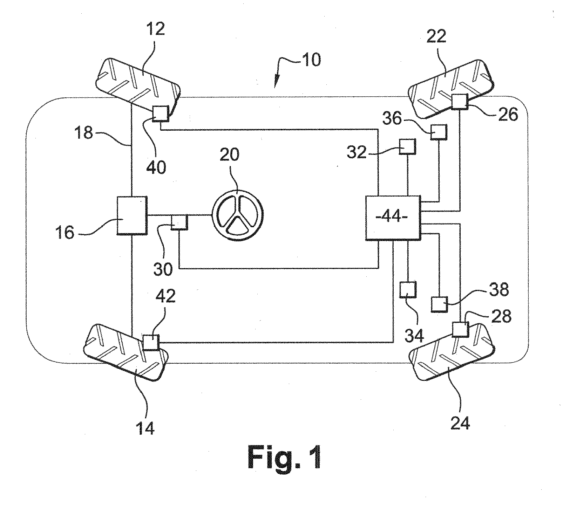

A la figure 1, il est représenté schématiquement un véhicule automobile 10 comportant une paire de roues avant directrices 12, 14. Un angle de braquage de cette paire de roues est piloté par un actionneur 16, via une crémaillère 18 disposée entre celles-ci, en fonction d'une commande de braquage, reçue de façon mécanique ou électrique, en provenance d'un volant de direction 20 à disposition d'un conducteur du véhicule.

Le véhicule 10 comprend également une paire de roues arrière directrices 22, 24 dont un angle de braquage est piloté au moyen d'actionneurs de braquage 26, 28 permettant d'orienter celles-ci.

Chacune des roues 12, 14, 22, 24 est par ailleurs équipée d'un dispositif hydraulique de freinage à plaquette (non représenté) pilotant le couple de freinage appliqué à celle-ci et commandé par un système ABS, comme cela est connu en soi.

Les organes venant d'être décrits sont commandés par une unité de commande électronique, ou unité ECU, en fonction de diverses mesures réalisées sur le véhicule et de consignes de fonctionnement en provenance du conducteur. L'architecture venant d'être décrite est classique et ne sera donc pas décrite plus en détail pour des raisons de concision.

Un système de commande du braquage des roues arrière 22, 24 visant à rejeter un couple de lacet produit par une différence entre les couples de freinage appliqués aux roues avant 12, 14 est par ailleurs prévu.

Ce système de commande comporte :

- un capteur 30 mesurant un angle $\alpha_V$ du volant de direction 20 ;
- un capteur 32 mesurant la vitesse longitudinale V du véhicule 10;
- un capteur 34 mesurant la vitesse de lacet $\dot{\psi}$ du véhicule 10;
- des capteurs 36, 38 mesurant l'angle de braquage $\alpha_{AR}$ des roues arrière 20, 22 ;
- des capteurs 40, 42 mesurant des pressions de freinage $P_{AVG}$, $P_{AVD}$ des dispositifs hydraulique de freinage des roues avant 12, 14 ; et
- une unité de traitement d'informations 44, par exemple l'unité ECU du véhicule, connectée aux capteurs 30-42 et aux actionneurs de braquage 24, 26 des roues arrière 20, 22. L'unité 44 calcule pour ces derniers un signal $U_{\alpha AR}$ de commande de l'angle de braquage $\alpha_{AR}$ des roues arrière en fonction de mesures reçues des capteurs 30-42.

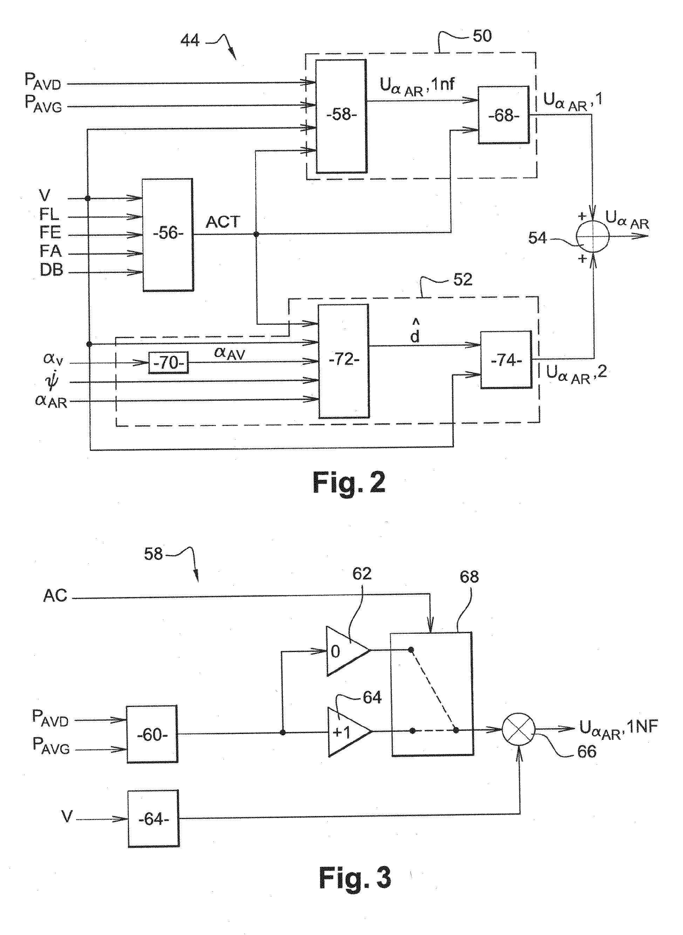

L'unité de traitement d'informations 44 est à présent décrite en relation avec les figures 2 et 3.

Cette unité 44 comprend un premier module 50 de calcul d'une première composante $U_{\alpha AR,1}$ du signal de commande $U_{\alpha AR}$ en fonction des pressions de freinage $P_{AVG}$, $P_{AVD}$ et de la vitesse longitudinale $V$ mesurées.

La première composante $U_{\alpha AR,1}$ est calculée de manière à ce que son application aux actionneurs de braquage 26, 28 ait pour effet d'annuler un couple de lacet $C_\psi$ généré sur le véhicule 10 par une différence entre les pressions de freinage $P_{AVG}$ et $P_{AVD}$.

On notera à cet égard qu'il est équivalent, dans le cadre de l'application à un véhicule, dont un couple de freinage $C_{frein}$ appliqué à une roue est produit par un dispositif hydraulique de freinage à plaquette, de considérer la pression de freinage $P$ appliqué à cette roue ou le couple de freinage $C_{frein}$.

En effet, le couple de freinage peut être calculé en fonction de la pression de freinage $P$ selon la relation $C_{frein}$ - $K \times P$ où $K = 2 \times \mu \times \phi \times R_e$ est une constante prédéterminée dépendant uniquement de caractéristiques du dispositif de freinage, avec $\mu$ est un coefficient de friction de la plaquette du dispositif de freinage, $\phi$ est une surface d'un piston actionnant ladite plaquette et $R_e$ est une distance moyenne entre le centre de la roue et une zone d'application de la plaquette sur la roue.

L'unité 44 comprend également un second module 52 de calcul d'une seconde composante $U_{\alpha AR,2}$ du signal de commande $U_{\alpha AR}$ en fonction de la vitesse longitudinale $V$, de l'angle $\alpha_V$ du volant, de la vitesse de lacet $\dot{\psi}$ et de l'angle de braquage $\alpha_{AR}$ mesurés.

La seconde composante $U_{\alpha AR,2}$ est calculée de manière à ce que son application aux actionneurs de braquage 26, 28 ait pour effet de rejeter une perturbation extérieure au véhicule sur la vitesse de lacet $\dot{\psi}$ et donc d'améliorer la précision du rejet du couple de lacet $C_\psi$.

Un additionneur 54 de l'unité 42 est par ailleurs connecté aux premier et second modules de calcul 50, 52 et additionne les composantes $U_{\alpha AR,1}$ et $U_{\alpha AR,2}$ pour former le signal de commande $U_{\alpha AR}$.

Enfin, un module 56 d'activation des premier et second modules 50, 52 de calcul est connecté au système ABS pour recevoir de celui-ci un drapeau. Ce drapeau $FL$ est relatif à l'existence d'une adhérence asymétrique. Le système ABS est apte à détecter une telle situation, par exemple en comparant des vitesses de rotation mesurées des roues du véhicule et/ou en comparant les pressions freinage $P_{AVG}$, $P_{AVD}$, comme cela est connu en soi.

Le module 56 d'activation reçoit également du système ABS un drapeau $FA$ relatif à l'existence d'une régulation ABS sur au moins une roue 12, 14, 22, 24 du véhicule et un drapeau $DB$ relatif à l'existence d'un freinage demandé par le conducteur. L'enfoncement d'une pédale de frein peut être à cet effet surveillé pour savoir si une telle demande de freinage existe.

Le module 56 d'activation est également, le cas échéant, connecté à un système de contrôle de la trajectoire du véhicule, ou système ESP, pour recevoir de celui-ci un drapeau $FE$ relatif à l'existence d'une régulation de la trajectoire du véhicule.

Le module 56 d'activation génère un signal $ACT$ d'activation ou de désactivation de la commande de l'angle de braquage des roues arrière en fonction des valeurs des drapeaux $FL$, $FA$, $DB$ et $FE$ reçues, une désactivation de la commande consistant à choisir une valeur nulle pour le signal de commande $U_{\alpha AR}$.

Le premier module 50 de calcul comporte quant à lui un sous-module 58 de calcul d'un signal de commande intermédiaire non filtré $U_{\alpha AR,1NF}$ dont un mode de réalisation est illustré à la figure 3.

Ce sous-module 58 comporte des moyens 60 de détermination d'un signal $U_{\alpha AR,1NF}$ selon la relation :

$$U_{\alpha_{AR},1NF} = \frac{D_1 + D_2}{D_1 D_2 L} Ke(P_{AVD} - P_{AVG}) \qquad (1)$$

où :

- $D_1$ est une rigidité de dérive prédéterminée des pneumatiques des roues avant du véhicule ;
- $D_2$ est une rigidité de dérive prédéterminée des roues arrière du véhicule ;
- $L$ est un empattement prédéterminé du véhicule, c'est-à-dire la distance séparent l'essieu avant du véhicule de l'essieu arrière du véhicule ;
- $e$ est une voie prédéterminée du véhicule, c'est-à-dire la distance séparant les centres des roues avant gauche et droite du véhicule.

On remarquera que le signal $U_{\alpha AR,1NF}$ permet théoriquement à lui seul, s'il était appliqué directement aux actionneurs de braquage 26 et 28 des roues arrières, de rejeter le couple de lacet $C_\psi$ produit par la différence ($P_{AVD}$ - $P_{AVG}$) en cas de freinage avec une adhérence asymétrique du type droite/gauche dans le cas où le comportement du véhicule est sensiblement celui d'un véhicule à deux roues sans ballant.

En effet, la différence ($P_{AVD}$ - $P_{AVG}$) génère une différence de couple de freinage selon la relation :

$$\Delta C_F = K(P_{AVD} - P_{AVG}) \qquad (2)$$

Cette différence $\Delta C_F$ de couple de freinage génère elle-même un couple de lacet $C_\psi$ selon la relation :

$$C_\psi = K(P_{AVD} - P_{AVG})\frac{e}{2} \qquad (3)$$

On montre à partir d'un modèle du véhicule à deux roues sans ballant que le couple de lacet $C_\psi$ peut être compensé par un signal $U_{\alpha AR,1NF}$ de commande de l'angle de braquage des roues arrière selon la relation (1).

Le sous-module 58 comporte en outre deux multiplicateurs 62, 64 connectés à la sortie du sous-module 60 et multipliant le signal $U_{\alpha AR,1NF}$ par les valeurs 0, +1 respectivement.

Un commutateur 62 à trois entrées et une sortie est connecté aux sorties des deux multiplicateurs 62, 64 et est piloté par le signal d'activation *ACT* généré par le module 56 d'activation.

Comme cela sera expliqué plus en détail par la suite, le signal *ACT* peut prendre deux états 0 et +1, l'état 0 correspondant à une désactivation du système de commande du braquage des roues arrière 22, 24 et l'état +1 correspondant à une activation du système de commande avec une situation de freinage avec une adhérence asymétrique. En fonction des états 0 et +1 du signal *ACT,* le commutateur 68 connecte sélectivement sa sortie aux multiplicateurs 62 et 64 respectivement.

Le sous-module 58 comprend également des moyens 64 de correction du signal en sortie du commutateur 68 en fonction de la vitesse longitudinale *V* du véhicule. En effet, on sait que le calcul du signal $U_{\alpha AR,1NF}$ selon la relation (1) se base sur un modèle prédéterminé du véhicule. Or, ce modèle est plus ou moins précis en fonction du domaine de fonctionnement du véhicule, et en particulier plus ou moins précis en fonction de l'état du système de freinage, et notamment l'usure et la température de celui-ci, et l'état des pneumatiques équipant les roues.

Les moyens 64 mettent par exemple en oeuvre une cartographie prédéterminée de gains de correction qui est par exemple déterminée expérimentalement lors d'une étude précédente sur un véhicule de test. Les moyens 64 de correction évaluent la cartographie en fonction de la vitesse longitudinale V mesurée et délivrent en sortie un gain de correction.

Enfin, le sous-module 58 comporte un multiplicateur 66 connecté au commutateur 68 et aux moyens 64 de correction et multipliant les sorties de ceux-ci pour former le signal de commande intermédiaire non filtré $U_{\alpha AR,1NF}$.

En se référant de nouveau à la figure 2, le premier module de calcul 50 de la composante $U_{\alpha AR,1}$ comporte également un sous-module 68 de filtrage connecté à la sortie du sous-module 58. Le sous-module 68 met en oeuvre un filtrage du type passe-bas du signal de commande intermédiaire non filtré $U_{\alpha AR,1NF}$, comme par exemple un filtre passe-bas du premier ordre, de constante de temps $\tau$.

De manière avantageuse, la dynamique du filtrage mis en oeuvre par le sous-module 68 est variable de manière à ce que la commande mise en oeuvre par le premier module 50 puisse s'adapter aux différentes phases du freinage, en tenant compte à la fois de la nécessité de rejeter de manière efficace le couple de lacet et le souhait du conducteur d'avoir une conduite agréable.

Le terme « dynamique » renvoie ici à la notion selon laquelle une commande, ici le signal $U_{\alpha AR,1}$, est apte à suivre des variations du ou des signaux de mesure, ici les signaux de pression $P_{AVG}$, $P_{AVD}$.

Plus particulièrement, le sous-module 68 de filtrage présente au début du freinage, caractérisé par une période $\Delta T$ prédéterminée depuis l'instant de basculement du signe *ACT* de la valeur 0 à une valeur non nulle, une dynamique rapide. Par exemple, au début du freinage, la fréquence de coupure à -3dB du filtre passe-bas, c'est-à-dire la valeur $1/_\tau$, est réglée sur $\tau$ =0,1 seconde.

Une fois la durée $\Delta T$ écoulée, le sous-module 68 présente une dynamique lente, par exemple par réglage de la fréquence de coupure sur $\tau$ =0,6 seconde.

Ainsi, lors des premiers instants du freinage, il n'y a sensiblement pas de filtrage mis en oeuvre. De fait, il n'existe sensiblement pas de retard entre le signal de commande $U_{\alpha AR,1}$ et signaux de pression $P_{AVG}$, $P_{AVD}$. De plus, le signal de commande $U_{\alpha AR},1$ peut varier rapidement et le couple de lacet $C_\psi$ est ainsi compensé rapidement. L'absence de retard et la compensation rapide sont importantes en début de freinage car le véhicule peut faire face à un couple de lacet important qu'il est nécessaire de minimiser.

Une fois la durée $\Delta T$ écoulée, le couple de lacet $C_\psi$ est en grande partie atténué, par exemple de plus de 90%. Le filtrage des hautes fréquences des signaux $P_{AVG}$, $P_{AVD}$ évite à ces dernières d'être répercutée dans le signal de commande $U_{\alpha AR}$ envoyé aux actionneurs de braquage des roues arrière du véhicule. Ainsi, l'angle de braquage de ces dernières ne présente sensiblement aucune oscillation haute fréquence, les oscillations haute fréquence étant un phénomène qui nuit au confort de conduite du véhicule.

De préférence, la durée $\Delta T$ est sensiblement égale à 1 seconde. On observe en effet qu'après une telle durée le couple de lacet $C_\psi$ ne présente plus de danger.

En variante, le sous-module 58 met en oeuvre un autre type de filtrage, comme par exemple un filtrage passe-bas d'ordre supérieur à 1.

De même, d'autres critères que la durée $\Delta T$, peuvent être utilisés pour décider de l'instant de commutation de la dynamique rapide à la dynamique lente. Par exemple, la puissance de la différence de pressions ($P_{AVD}$ - $P_{AVG}$) est calculée et la commutation a lieu lorsque celle-ci est inférieure à une valeur prédéterminée. L'utilisation de la durée $\Delta T$ comme critère de commutation est cependant préféré car il s'agit d'un critère simple et robuste qui ne nécessite aucun calcul supplémentaire.

De manière synthétique, on peut noter que la commande mise en oeuvre pas le premier module 50 de calcul, décrit en relation avec les figures 2 et 3, peut donc s'écrire sous la forme

$$U_{\alpha_{AR},1} = \left( g\, \frac{D_1 + D_2}{D_1 D_2 L} Ke \right) F \otimes (P_{AVD} - P_{AVG}),$$ où $\otimes$ est le produit de convolution, F est la réponse impulsionnelle du filtre passe-bas mis en oeuvre par le sous-module 68 et g est un gain dépendant du type d'adhérence asymétrique observée lors du freinage.

En se référant de nouveau à la figure 2, le second module 52 de calcul de la seconde composante $U_{\alpha_{AR},2}$ du signal de commande $U_{\alpha_{AR}}$ comprend un sous-module 70 de calcul d'un angle $\alpha_{AV}$ de braquage des roues avant en fonction de l'angle volant $\alpha_V$, comme cela sera expliqué en plus détail par la suite.

Le second module 52 comporte également un sous-module 72 d'estimation d'une perturbation extérieure sur le véhicule, et plus particulièrement un moment de lacet généré par un freinage du véhicule sur une adhérence asymétrique.

Comme on peut le constater, le premier module de commande 50 est commande en boucle ouverte basée sur un modèle simplifiée de la dynamique du véhicule.

Or, le modèle utilisé pour concevoir cette commande a une précision limitée à deux roues sans ballant. D'autre part, le premier module de commande 50 ne tient pas compte d'une éventuelle différence de pression de freinage entre les roues arrière. Il s'en suit que la commande mise en oeuvre par le premier module 50 de calcul peut s'avérer imprécise.

Pour améliorer la précision de la compensation du couple de lacet, une perturbation additive $d$ du type échelon sur la vitesse de lacet $\dot{\psi}$ est estimée par le sous-module 72 puis l'estimation de la perturbation $d$ est utilisé par un sous-module 74 pour effectuer un rejet asymptotique de l'effet de la perturbation $d$ sur le couple de lacet $C_f$. Ceci est particulièrement avantageux car la mesure de la vitesse de lacet $\dot{\psi}$ est usuellement présente dans le véhicule.

Plus particulièrement, le sous-module 72 met en oeuvre un observateur d'état basé sur le modèle du véhicule à deux roues sans ballant selon les relations :

$$\hat{X}(t) = \begin{bmatrix} \hat{\dot{\psi}}(t) \\ \hat{\dot{\beta}}(t) \\ \hat{\dot{\alpha}}_{ARF}(t) \\ \hat{\dot{d}}(t) \end{bmatrix} = \begin{pmatrix} -\dfrac{D_1 L_1^2 + D_2 L_2^2}{V I_z} & \dfrac{D_2 L_2 - D_1 L_1}{I_z} & -\dfrac{D_2 L_2}{I_Z} & 0 \\ -1 + \dfrac{D_2 L_2 - D_1 L_1}{M V^2} & -\dfrac{D_1 + D_2}{M V} & \dfrac{D_2}{M V} & 0 \\ 0 & 0 & 0 & -\dfrac{1}{\tau_A} \\ 0 & 0 & 0 & 0 \end{pmatrix} \begin{bmatrix} \hat{\psi}(t) \\ \hat{\beta}(t) \\ \hat{\alpha}_{ARF}(t) \\ \hat{d}(t) \end{bmatrix} + \ldots$$

$$\ldots + \begin{bmatrix} 0 \\ 0 \\ \dfrac{1}{\tau_A} \\ 0 \end{bmatrix} \alpha_{AR}(t) + \begin{bmatrix} \dfrac{D_1 L_1}{I_z} \\ \dfrac{D_1}{M V} \\ 0 \\ 0 \end{bmatrix} \alpha_{AV}(t) + K(V)\left( \dot{\psi}(t) - \hat{y}(t) \right)$$

(4)

$$\hat{y}(t) = \begin{pmatrix} 1 & 0 & 0 & 1 \end{pmatrix} \begin{bmatrix} \hat{\dot{\psi}}(t) \\ \hat{\beta}(t) \\ \hat{\alpha}_{ARF}(t) \\ \hat{d}(t) \end{bmatrix} \qquad (5)$$

où le signe ^ désigne une grandeur estimée et l'absence de signe ^ une grandeur reçues par le sous module 72, avec :

- t est le temps ;
- $I_Z$ est le moment d'inertie par rapport un axe vertical passant par le centre de gravité du véhicule ;
- $L_1$ est une valeur prédéterminée de la distance du centre de gravité du véhicule à l'essieu avant de celui-ci ;
- M est une masse prédéterminée du véhicule ;
- $L_2$ est une valeur prédéterminée de la distance du centre de gravité du véhicule à l'essieu arrière de celui-ci ;
- $\beta$ est un angle de dérive du véhicule ;
- $\tau_A$ est une constante de temps prédéterminée des actionneurs de braquage 26, 28 des roues arrière, modélisés par un filtre passe-bas du premier ordre;
- $\hat{\alpha}_{ARF}(t)$ est un angle de braquage arrière en sortie du filtre modélisant les actionneurs de braquage des roues arrière ; et

- $K(V) = \begin{pmatrix} k_1(V) \\ k_2(V) \\ k_3(V) \\ k_4(V) \end{pmatrix}$ est une matrice de gain de l'observateur dépendant de la vitesse V du véhicule. Par exemple, la matrice K est tabulée dans le sous-module 72 en fonction de la vitesse longitudinale V du véhicule, chaque valeur tabulée de la matrice K étant par exemple obtenue par une synthèse linéaire quadratique, ou synthèse LQ, classique.

Le sous-module 74 de rejet asymptotique de l'effet de la perturbation $d$ sur le couple de lacet $C_\psi$ met quant à lui en oeuvre un calcul de la seconde composante $U_{\alpha AR,2}$ du signal de commande $U_{\alpha AR}$ selon la relation suivante :

$$U_{\alpha_{AR},2}(t) = -\frac{\left((D_1 L_1 - D_2 L_2)(MV^2 L_2 + D_1 L_1(L_1 + L_2)) - D_1(L_1 + L_2)(D_1 L_1^2 + D2 L_2^2)\right)}{V D_1 D_2 L_2 (L_1 + L_2)} \hat{d}(t) \quad (5)$$

La relation (5) est basée sur une relation mécanique entre une perturbation additive sur la vitesse de lacet $\dot{\psi}$ et l'angle de braquage arrière nécessaire pour rejeter ladite perturbation. Ainsi, la perturbation est sensiblement rejetée lorsque l'observateur mis en oeuvre par le sous-module 72 a convergé.

On notera que l'angle $\alpha_{AV}$ de braquage des roues avant est ici déterminé par le sous-module 70 en fonction de l'angle volant $\alpha_V$, comme cela sera expliqué ci-dessous.

En variante, le système comporte un capteur mesurant l'angle de braquage $\alpha_{AV}$ des roues avant et l'observateur d'état mis en oeuvre par le sous-module 72 d'estimation utilise cette mesure de l'angle de braquage. Le sous-module 70 est alors omis.

Or une telle variante pose le problème suivant.

Lorsque la chaussée sur laquelle roule le véhicule présente un dévers à droite ou à gauche, le conducteur doit tourner son volant d'un angle $\alpha_{V0}$ non nul pour que le véhicule suive une ligne droite. Ceci peut être considéré comme une perturbation sur la vitesse de lacet $\dot{\psi}$. Ainsi, si un freinage avec une adhérence asymétrique est déclenché, le second module 52 de calcul met alors en oeuvre un rejet d'une telle perturbation. Le système de commande selon l'invention commande donc le braquage des roues arrière de manière à ce que le conducteur doive annuler l'angle $\alpha_{V0}$ (c'est-à-dire centrer le volant) pour rouler en ligne droite.

Toutefois, si le conducteur bloque son volant sur un angle $\alpha_{V0}$ non nul, le dévers sera alors surcompensé puisqu'à la fois le système de commande et le conducteur agissent pour contrer celui-ci. Il s'en suit que le véhicule ne suit pas une trajectoire rectiligne.

Pour éviter un tel comportement du véhicule, le sous-module 70 applique une zone morte sur l'angle volant $\alpha_V$ pour calculer l'angle de braquage $\alpha_{AR}$ des roues avant.

Plus particulièrement, le sous-module 70 met en oeuvre le calcul suivant :

$$
\begin{cases}
\alpha_{AR} = 0 & \text{si } |\alpha_V| \le \alpha_{ZM} \\[3mm]
\alpha_{AR} = \dfrac{\alpha_V - \alpha_{ZM}}{R_{dem}} & \text{si } \alpha_V > \alpha_{ZM} \\[3mm]
\alpha_{AR} = \dfrac{\alpha_V + \alpha_{ZM}}{R_{dem}} & \text{si } \alpha_V < \alpha_{ZM}
\end{cases}
\tag{6}
$$

où $\alpha_{ZM}$ est un angle prédéterminé de zone morte, et $R_{dem}$ est un rapport de démultiplication prédéterminé entre l'angle du volant $\alpha_V$ et l'angle de braquage $\alpha_{AR}$ des roues avant.

Ainsi, dans la situation de dévers mentionnée ci-dessus, lorsque le conducteur bloque le volant sur angle volant $\alpha_V$ inférieur ou égal à l'angle $\alpha_{ZM}$, un angle de braquage $\alpha_{AR}$ des roues avant nul est envoyé au sous-module 72. De fait, celui-ci considère qu'il n'existe aucune perturbation provoquée par le dévers. Le dévers est alors seulement compensé par le conducteur du véhicule et le véhicule suit une trajectoire rectiligne.

De préférence, l'angle $\alpha_{ZM}$ est déterminé pour correspondre à un devers maximal en deçà duquel, il est considéré que le conducteur peut compenser de lui-même un dévers sans aide. L'angle $\alpha_{ZM}$ est par exemple égal à 10°.

La commande de l'angle de braquage $\alpha_{AR}$ des roues arrière venant d'être décrite n'est activée par le module 56 d'activation que dans des situations de freinage particulières, à savoir lorsque l'ensemble des conditions d'activation suivantes sont réunies :

- condition 1: une situation d'adhérence asymétrique est possible. Par exemple, cette condition 1 est remplie lorsque le conducteur applique un freinage (drapeau *DB* = 1) et lorsque au moins une des quatre roues 12, 14, 22, 24 du véhicule est sujette à une régulation ABS (drapeau FA = 1);
- condition 2 : une situation d'adhérence asymétrique est observée (*FL* = +1 lorsqu'une adhérence asymétrique est observée) ;
- condition 3 : une régulation de la trajectoire du véhicule par le système ESP n'est pas activée (drapeau *FE* = 0), afin d'éviter toute interaction entre la commande de trajectoire et la commande du braquage des roues arrière ;
- condition 4 : il s'est écoulé une durée prédéterminée depuis la dernière désactivation de la commande de l'angle de braquage des roues arrière. Ceci évite d'activer celle-ci en cas d'une adhérence asymétrique dite en « damiers ». Une adhérence en damier présente des variations d'adhérence trop rapides pour les actionneurs de braquage 26, 28 des roues arrière dont le temps de réponse est limité. Par exemple, cette durée est choisie égale à 0,5 seconde, c'est-à-dire sensiblement supérieure à la constance de temps $\tau_A$ de ces actionneurs de braquage.

Si l'ensemble de ces conditions sont réunies, le module 56 d'activation émet donc un signal *ACT* égal au drapeau *FL.*

Par ailleurs, la commande de l'angle de braquage des roues arrière est désactivée lorsqu'au moins une des conditions de désactivation suivante est satisfaite :

- condition 5 : la vitesse longitudinale V du véhicule est inférieure à une valeur de seuil prédéterminée, par exemple 10 km/h. Ceci permet de ne pas être dépendant de fortes imprécisions des modèles pour des vitesses inférieures à la valeur seuil ;
- condition 6 : l'adhérence asymétrique n'est plus observée (drapeau *FL* = 0) ;
- condition 7 : une régulation de la trajectoire du véhicule par le système ESP est activée (drapeau *FE* = 1).

Lorsqu'au moins une des conditions de désactivation est remplie, le module 56 d'activation émet alors un signal *ACT* de valeur nulle.

Il vient d'être décrit un système de commande de l'angle de braquage des roues arrière en fonction de pression de freinage des roues avant.

On comprendra bien évidemment que la présente invention s'applique également, sous couvert de modifications mineures à la portée de l'homme du métier, à la commande de toute paire de roues directrices en fonction de pressions de freinage mesurées sur une roue gauche et une roue droite du véhicule.

Par exemple, il est possible d'envisager :

- la commande de l'angle de braquage des roues avant ou arrière en fonction des pressions de freinage mesurée de celles-ci ;
- la commande de l'angle de braquage des roues avant en fonction de pression de freinage mesurée des roues arrière ; ou
- la commande de l'angle de braquage des roues avant ou de l'angle de braquage des roues arrière en fonction de la pression de freinage mesurée de la roue avant droite ou de la roue arrière droite et de la pression de freinage mesurée de la roue avant gauche ou de la roue arrière gauche.

En effet, un couple de lacet apparaît dès qu'il existe une différence entre des couples de freinage (et donc des pressions de freinage) entre le côté gauche du véhicule ou le côté droit du véhicule.

Par ailleurs, il a été décrit un mode de réalisation préféré de l'invention dans lequel un rejet de perturbation est effectué par le second module 52. En variante, le second module 52 est omis.

**Revendications**

1. Système de commande du braquage d'une paire de roues directrices (22, 24) d'un véhicule automobile (10) en situation de freinage avec adhérence asymétrique, ledit système comportant des moyens (44) de commande d'un angle de braquage ($\alpha_{AR}$) de la paire de roues directrices (22, 24) afin de minimiser une différence entre des couples de freinage appliqués à une roue droite (12) et une roue gauche (14) du véhicule (10), **caractérisé en ce que** les moyens (44) de commande comprennent des moyens (58) de détermination d'un signal de commande intermédiaire ($U_{\alpha_{AR,1NF}}$) de l'angle de braquage et des moyens (68) de filtrage passe-bas du signal de commande intermédiaire, les moyens (68) de filtrage présentant au moins une constante de temps variable, pour être aptes à mettre en oeuvre une loi de commande à dynamique variable, rapide au début du freinage puis lente.

2. Système selon la revendication 1, **caractérisé en ce que** la loi de commande présente une dynamique rapide pendant une durée prédéterminée après l'instant de déclenchement du freinage.

3. Système selon la revendication 2, **caractérisé en ce que** la durée prédéterminée est sensiblement égale à 1 seconde.

4. Système selon l'une quelconque des revendications précédentes, **caractérisé en ce que**, en début de freinage, la au moins une constante de temps est sensiblement inférieure à un temps de réponse d'une pression de freinage d'un dispositif de freinage.

5. Système selon l'une quelconque des revendications précédentes, **caractérisé en ce que** le véhicule (10) est muni d'une paire de roue directrice avant (12, 14) et d'une paire de roues directrice arrière (22, 24), et **en ce que** les moyens (44) de commande sont aptes à commander l'angle de braquage ($\alpha_{AR}$) des roues arrières pour minimiser une différence entre des couples de freinage appliqués aux roues avant.

6. Système selon l'une quelconque des revendications précédentes, **caractérisé en ce qu'**il comporte des moyens (40, 42) de mesure de pression de freinage ($P_{AVG}$, $P_{AVD}$) appliquées aux roues gauche et droite (12, 14), et **en ce que** les moyens (44) de commande sont aptes à commander l'angle de braquage ($\alpha_{AR}$) des roues directrices en fonction d'une différence entre les pressions de freinage mesurées.

7. Système selon les revendications 5 et 6, **caractérisé en ce que** les moyens (44) de commande sont aptes à commander l'angle de braquage ($\alpha_{AR}$) des roues directrices selon la relation :

$$U_{\alpha_{AR},1} = \left( g\, \frac{D_1 + D_2}{D_1 D_2 L} Ke \right) F \otimes (P_{AVD} - P_{AVG})$$

où F est un filtre du type passe-bas à dynamique variable, $P_{AVG}$, $P_{AVD}$ sont les pressions de freinage des roues avant, $D_1$ est la rigidité de dérive des pneumatiques des roues avant du véhicule, $D_2$ est la rigidité de dérive des roues arrière du véhicule, L est l'empattement du véhicule, e est la voie du véhicule, K est une constante prédéterminée, et g est un gain dépendant du type d'adhérence asymétrique observée.

8. Système selon l'une quelconque des revendications précédentes, **caractérisé en ce qu'**il comporte en outre des moyens (70) d'estimation d'une perturbation extérieure relative à un couple de lacet du véhicule, et des moyens (74) de rejet de ladite perturbation par une commande de l'angle de braquage ($\alpha_{AR}$) des roues directrices en fonction de la perturbation estimée ($\hat{d}$).

9. Système selon la revendication 8, **caractérisé en ce que** les moyens (70) d'estimation sont aptes à mettre en oeuvre un observateur d'état d'une perturbation additive sur une vitesse de lacet du véhicule.

10. Procédé de commande du braquage d'une paire de roues directrices (22, 24) d'un véhicule automobile (10) en situation de freinage avec adhérence asymétrique, ledit procédé comportant une étape de commande d'un angle de braquage ($\alpha_{AR}$) de la paire de roues directrices afin de minimiser une différence entre des couples de freinage appliqués à une roue droite (12) et une roue gauche (14) du véhicule, **caractérisé en ce que** l'étape de commande comprend la détermination d'un signal de commande intermédiaire ($U_{\alpha_{AR},1NF}$) de l'angle de braquage et un filtrage passe-bas du signal de commande intermédiaire à l'aide d'au moins une constante de temps variable, pour la mise en oeuvre d'une loi de commande à dynamique variable, rapide au début du freinage puis lente.

**Patentansprüche**

1. System zur Steuerung des Einschlags eines Paars von gelenkten Rädern (22, 24) eines Kraftfahrzeugs (10) in einer Bremssituation mit asymmetrischer Haftung, wobei das System Einrichtungen (44) zur Steuerung eines Einschlagwinkels ($\alpha_{AR}$) des Paars von gelenkten Rädern (22, 24) aufweist, um eine Differenz zwischen Bremsmomenten zu minimieren, die an ein rechtes Rad (12) und ein linkes Rad (14) des Fahrzeugs (10) angewendet werden, **dadurch gekennzeichnet, dass** die Steuereinrichtungen (44) Einrichtungen (58) zur Bestimmung eines Zwischensteuersignals ($U_{\alpha_{AR}1NF}$) des Einschlagwinkels und Einrichtungen (68) zur Tiefpassfilterung des Zwischensteuersignals enthalten, wobei die Filtereinrichtungen (68) mindestens eine variable Zeitkonstante aufweisen, um ein Steuergesetz mit variabler Dynamik einsetzen zu können, die zu Beginn des Bremsens schnell und dann langsam ist.

2. System nach Anspruch 1, **dadurch gekennzeichnet, dass** das Steuergesetz während einer vorbestimmten Dauer nach dem Auslösezeitpunkt des Bremsens eine schnelle Dynamik aufweist.

3. System nach Anspruch 2, **dadurch gekennzeichnet, dass** die vorbestimmte Dauer im Wesentlichen gleich 1 Sekunde ist.

4. System nach einem der vorhergehenden Ansprüche, **dadurch gekennzeichnet, dass** zu Beginn des Bremsens die mindestens eine Zeitkonstante deutlich niedriger als eine Reaktionszeit eines Bremsdrucks einer Bremsvorrichtung ist.

5. System nach einem der vorhergehenden Ansprüche, **dadurch gekennzeichnet, dass** das Fahrzeug (10) mit einem Paar von vorderen gelenkten Rädern (12, 14) und mit einem Paar von hinteren gelenkten Rädern (22, 24) ausgestattet ist, und dass die Steuereinrichtungen (44) den Einschlagwinkel ($\alpha_{AR}$) der Hinterräder steuern können, um eine Differenz zwischen an die Vorderräder angewendeten Bremsmomenten zu minimieren.

6. System nach einem der vorhergehenden Ansprüche, **dadurch gekennzeichnet, dass** es Einrichtungen (40, 42) zur Bremsdruckmessung ($P_{AVG}$, $P_{AVD}$) aufweist, die an das linke und an das rechte Rad (12, 14) angewendet werden, und dass die Steuereinrichtungen (44) den Einschlagwinkel ($\alpha_{AR}$) der gelenkten Räder abhängig von einer Differenz zwischen den gemessenen Bremsdrücken steuern können.

7.  System nach den Ansprüchen 5 und 6, **dadurch gekennzeichnet, dass** die Steuereinrichtungen (44) den Einschlagwinkel ($\alpha_{AR}$) der gelenkten Räder gemäß der folgenden Gleichung steuern können:

$$U_{\alpha_{AR},1} = \left( g\, \frac{D_1 + D_2}{D_1 D_2 L} Ke \right) F \otimes (P_{AVD} - P_{AVG})$$

wobei F ein Filter von der Art Tiefpassfilter mit variabler Dynamik ist, $P_{AVG}$, $P_{AVD}$ die Bremsdrücke der Vorderräder sind, $D_1$ die Driftsteifigkeit der Luftreifen der Vorderräder des Fahrzeugs ist, $D_2$ die Driftsteifigkeit der Hinterräder des Fahrzeugs ist, L der Radstand des Fahrzeugs ist, e die Fahrspur des Fahrzeugs ist, K eine vorbestimmte Konstante und g eine Verstärkung abhängig von der festgestellten Art der asymmetrischen Haftung ist.

8.  System nach einem der vorhergehenden Ansprüche, **dadurch gekennzeichnet, dass** es außerdem Einrichtungen (70) zur Schätzung einer äußeren Störung bezüglich eines Giermoments des Fahrzeugs und Einrichtungen (74) zur Zurückweisung der Störung durch eine Steuerung des Einschlagwinkels ($\alpha_{AR}$) der gelenkten Räder abhängig von der geschätzten Störung (d) aufweist.

9.  System nach Anspruch 8, **dadurch gekennzeichnet, dass** die Schätzeinrichtungen (70) einen Zustandsbeobachter einer zusätzlichen Störung bei einer Giergeschwindigkeit des Fahrzeugs einsetzen können.

10. Verfahren zur Steuerung des Einschlags eines Paars von gelenkten Rädern (22, 24) eines Kraftfahrzeugs (10) in einer Bremssituation mit asymmetrischer Haftung, wobei das Verfahren einen Schritt der Steuerung eines Einschlagwinkels ($\alpha_{AR}$) des Paars von gelenkten Rädern aufweist, um eine Differenz zwischen Bremsmomenten zu minimieren, die an ein rechtes Rad (12) und ein linkes Rad (14) des Fahrzeugs angewendet werden, **dadurch gekennzeichnet, dass** der Steuerschritt die Bestimmung eines Zwischensteuersignals ($U_{\alpha_{AR1NF}}$) des Einschlagwinkels und eine Tiefpassfilterung des Zwischensteuersignals mit Hilfe mindestens einer variablen Zeitkonstante enthält, um ein Steuergesetz mit variabler Dynamik einzusetzen, die zu Beginn des Bremsens schnell und dann langsam ist.

## Claims

1.  System for controlling the turn of a pair of guiding wheels (22, 24) of an automobile (10) in a braking situation with asymmetrical adhesion, said system comprising means (44) of controlling a turn angle ($\alpha_{AR}$) of the pair of guiding wheels (22, 24) in order to minimize a difference between braking torques applied to a right wheel (12) and a left wheel (14) of the vehicle (10), **characterized in that** the control means (44) comprise means (58) of determining an intermediate control signal ($U_{\alpha_{AR},1NF}$) for the turn angle and low-pass filtering means (68) for the intermediate control signal, the filtering means (68) exhibiting at least one variable time constant, so as to be able to apply a control law with a variable dynamic range which is fast at the start of braking and then slow.

2.  System according to Claim 1, **characterized in that** the control law offers a fast dynamic range for a predetermined duration after the instant of initiation of the braking.

3.  System according to Claim 2, **characterized in that** the predetermined duration is roughly equal to one second.

4.  System according to any one of the preceding claims, **characterized in that**, at the start of braking, the at least one time constant is substantially less than a braking pressure response time of a braking device.

5.  System according to any one of the preceding claims, **characterized in that** the vehicle (10) is provided with a pair of front guiding wheels (12, 14) and a pair of rear guiding wheels (22, 24), and **in that** the control means (44) are able to control the turn angle ($\alpha_{AR}$) of the rear wheels to minimize a difference between braking torques applied to the front wheels.

6.  System according to any one of the preceding claims, **characterized in that** it comprises means (40, 42) of measuring braking pressure ($P_{AVG}$, $P_{AVD}$) applied to the left and right wheels (12, 14), and **in that** the control means (44) are able to control the turn angle ($\alpha_{AR}$) of the guiding wheels according to a difference between the measured braking pressures.

7. System according to Claims 5 and 6, **characterized in that** the control means (44) are able to control the turn angle ($\alpha_{AR}$) of the guiding wheels according to the relation:

$$U_{\alpha_{AR},1} = \left( g \frac{D_1 + D_2}{D_1 D_2 L} Ke \right) F \otimes (P_{AVD} - P_{AVG}),$$

where F is a filter of low-pass type with variable dynamic range, $P_{AVG}$, $P_{AVD}$ are front wheel braking pressures, $D_1$ is the rigidity of drift of the tires of the front wheels of the vehicle, $D_2$ is the rigidity of the drift of the rear wheels of the vehicle, L is the wheelbase of the vehicle, e is the track of the vehicle, K is a predetermined constant, and g is a gain dependent on the type of asymmetrical adhesion observed.

8. System according to any one of the preceding claims, **characterized in that** it further comprises means (70) of estimating an external disturbance relative to a yaw torque of the vehicle, and means (74) of rejecting said disturbance by a control of the turn angle ($\alpha_{AR}$) of the guiding wheels according to the estimated disturbance ($\hat{d}$).

9. System according to Claim 8, **characterized in that** the estimation means (70) are able to implement an observer of the state of an additive disturbance on a yaw speed of the vehicle.

10. Method of controlling the turn of a pair of guiding wheels (22, 24) of an automobile (10) in a braking situation with asymmetrical adhesion, said method comprising a step for controlling a turn angle ($\alpha_{AR}$) of the pair of guiding wheels in order to minimize a difference between braking torques applied to a right wheel (12) and a left wheel (14) of the vehicle, **characterized in that** the control step comprises the determination of an intermediate control signal ($U_{\alpha_{AR}, 1NF}$) for the turn angle and a low-pass filtering of the intermediate control signal by means of at least one variable time constant, for the application of a control law with variable dynamic range which is fast at the start of braking and then slow.

**Fig. 1**

**Fig. 2**

**Fig. 3**

**EP 2 170 678 B1**

**Documents brevets cités dans la description**

- FR 2876339 A1